# EUROPEAN PATENT APPLICATION

(11) **EP 4 219 980 A1**
(43) Date of publication of application: **02.08.2023**
(21) Application number: 21871068.9
(22) Date of filing: 04.08.2021
(51) Int. Cl.: F16H 3/087

(54) **DUAL CLUTCH TRANSMISSION AND VEHICLE HAVING SAME**

(30) Priority: 23.09.2020 CN 202022099506 U
(71) Applicant: Hycet Transmission System (Jiangsu) Co., Ltd., Zhenjiang, Jiangsu 212200 (CN)
(72) Inventor: LI, Liang, Zhenjiang, Jiangsu 212200 (CN); FAN, Taosheng, Zhenjiang, Jiangsu 212200 (CN); GUO, Mingliang, Zhenjiang, Jiangsu 212200 (CN); SHI, Bowen, Zhenjiang, Jiangsu 212200 (CN)
(74) Representative: dompatent von Kreisler Selting Werner - Partnerschaft von Patent- und Rechtsanwälten mbB
(86) International application number: PCT/CN2021/110547
(87) International publication number: WO 2022/062691

(57) **Abstract**

A dual clutch transmission (100), including an input shaft (10). A first output shaft (20) is selectively power-connected to the input shaft (10). A second output shaft (30) is selectively power-connected to the input shaft (10). A plurality of shifting driven gears (40) are provided, and the plurality of shifting driven gears (40) are respectively provided on the first output shaft (20) and the second output shaft (30). At least two of the plurality of shifting driven gears (40) are configured as bypassing gears, and when the dual clutch transmission (100) achieves high-speed shifting power output by means of the bypassing gears, two adjacent bypassing gears are subjected to an axial force facing each other.

## Description

### CROSS-REFERENCE TO RELATED APPLICATIONS

This application claims the priority from Chinese patent application No. 202022099506.6, titled "Dual-clutch Transmission and Vehicle having the same" filed on September 23, 2020, in the name of HYCET Transmission Technology Heibei Co., Ltd.

### TECHNICAL FIELD

The present application relates to the technical field of vehicles, in particular to a dual-clutch transmission and a vehicle having the same.

### BACKGROUND

In related technologies, it is required that the existing dual-clutch transmissions be more and more compact, and at the same time, the number of gears be greater. Therefore, each OEM adopts a bypassing gear structure with a one-way synchronizer to make the power flow bypass between the two input shafts, thereby achieving more gear configurations.

A synchronizer is arranged between two adjacent driven gears to realize a bypassing gear structure, so that the power flow can bypass between two input shafts to achieve multiple gears. However, when two adjacent driven gears are locked by a synchronizer, the two driven gears cannot rotate relative to each other. At the same time, torque transmission is required between the two driven gears, resulting in a large axial force on the two driven gears.

As a result, when a high-gear power output is achieved through power bypassing, components, such as the bearings involved in power bypassing are required to withstand large axial forces, and the working environment is harsh, which will reduce the service life and operational stability of the dual-clutch transmission.

### SUMMARY

The present application aims to solve at least one of the technical problems existing in the existing technology. For this reason, an objective of the present application is to propose a dual-clutch transmission with higher operational stability and longer service life.

The present application further proposes a vehicle adopting the above-mentioned dual-clutch transmission.

A dual-clutch transmission, includes: an input shaft, a first output shaft, a second output shaft, and a plurality of driven gears. The first output shaft is optionally in a transmission connection with the input shaft. The second output shaft is optionally in a transmission connection with the input shaft. The plurality of driven gears is respectively arranged on the first output shaft and the second output shaft At least two of the plurality of driven gears are configured as bypassing gears, and two adjacent bypassing gears being subjected to axial forces directed toward each other when the dual-clutch transmission operates under a high-gear output through the bypassing gears.

With the dual-clutch transmission provided by the present application, the two adjacent bypassing gears are subjected to axial forces directed toward each other when achieving a high-gear power output, so that the working environment of the dual-clutch transmission can be improved, and gear disengagement and abnormal noise of the dual-clutch transmission can be avoided in high gear. This improves the operational stability and service life of the dual-clutch transmission.

A vehicle includes: the dual-clutch transmission described in the above embodiments.

Additional aspects and advantages of the present application will be set forth in part in the following description, and in part will be obvious from the description, or may be understood by the implementation of the application.

### BRIEF DESCRIPTION OF THE DRAWINGS

The above and/or additional aspects and advantages of the present application will become apparent and easily understood from the description of the embodiments in conjunction with the following drawings:
Fig. 1 is a schematic diagram of a dual-clutch transmission according to an embodiment of the present application; and
Fig. 2 is a partially enlarged view showing area A in Fig. 1.

### DETAILED DESCRIPTION OF THE EMBODIMENTS

In order to make the purpose, technical proposals, and advantages of the present application more clearly understood, the present application will be described in further detail hereinbelow with reference to the accompanying drawings and embodiments. It should be understood that the specific embodiments described herein are merely used to explain the present application, but not to limit the present application.

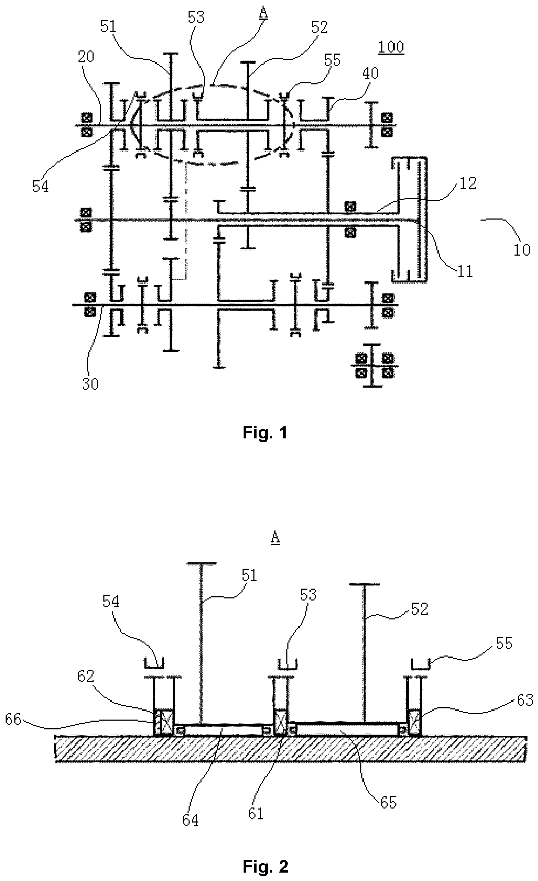

Referring now to Fig. 1, the power bypass process of the dual-clutch transmission 100 will be specifically described below.

When power bypass is required, the power can bypass the solid shaft 11 and the hollow shaft 12 of the input shaft 10 through the two driven gears 40, thereby increasing the number of gear positions.

It can be understood that, during the power bypass process, the power can be transmitted from one of the driven gears 40 to the other one of the driven gears 40 for a low gear, and the power can be transmitted from the other one of the driven gears 40 to the one of the driven gears 40 for a high gear.

However, since the existing driven gears 40 are both left-handed, thus the axial forces received by the two driven gears 40 are directed toward each other during the power bypass for low gear, and the resultant axial force is the difference between the two axial forces, namely, the force exerted on the dual-clutch transmission 100 in the operating state is stable, and the operational stability is high; however, the axial forces on the two driven gears 40 are directed away from each other during the power bypass for high gear, thus the axial stress of the dual-clutch transmission 100 is relatively large, and the rotational speed and torque at the high gear are relatively large, resulting in a severe stress environment and low operational stability of the dual-clutch transmission 100.

Referring to Figs. 1-2, a dual-clutch transmission 100 according to an embodiment of the present application and a vehicle having the same will be described below.

As shown in Fig. 1, the dual-clutch transmission 100 according to an embodiment of the first aspect of the present application includes: an input shaft 10, a first output shaft 20, a second output shaft 30, and a driven gear 40.

The first output shaft 20 is selectively in a transmission connection with the input shaft 10; the second output shaft 30 is selectively in a transmission connection with the input shaft 10; a plurality of driven gears 40 are provided, and the plurality of driven gears 40 are arranged respectively on the first output shaft 20 and the second output shaft 30 for the power output of a corresponding gear position.

At least two of the plurality of driven gears 40 are configured as bypassing gears, and the axial forces on two adjacent bypassing gears are directed toward each other when the dual-clutch transmission 100 achieves a power output of a high gear through the bypassing gears.

Specifically, the power bypass between the two adjacent bypassing gears may achieve a low-gear power output and a high-gear power output, and then by changing the direction of rotation of the two bypassing gears (for example, left-handed to right-handed), the two bypassing gears are subjected to axial forces directed towards each other when operating in high gear, and axial forces away from each other when operating in low gear, such that the severe axial forces that are away from each other are generated in the low gear, while a more stable, reliable axial forces directed toward each other which lead to a lower overall force are generated in the high gear with higher speed and heavier load, thereby improving the operational stability of the dual-clutch transmission 100.

In some embodiments, the input shaft 10 of the dual-clutch transmission 100 includes: a hollow shaft 12 and a solid shaft 11, and the plurality of driven gears on the first output shaft 20 may be selectively in a transmission connection with the solid shaft 11 or the hollow shaft 12, and the plurality of driven gears on the second output shaft 30 may be selectively in transmission connection with the solid shaft 11 or the hollow shaft 12.

With the dual-clutch transmission provided by the present application, the two adjacent bypassing gears are subjected to axial forces directed towards each other under high-gear power output, so that the working environment of the dual-clutch transmission 100 can be improved, and the gear disengagement and abnormal noise of the dual-clutch transmission 100 can be avoided in high gear. This improves the operational stability and service life of the dual-clutch transmission 100.

As shown in Fig. 2, according to some embodiments of the present application, the bypassing gears include: a first bypassing gear 51 and a second bypassing gear 52, and the dual-clutch transmission 100 further includes: a first synchronizer 53 located between the first bypassing gear 51 and the second bypassing gear 52, which is adapted to control the transmission connection between the first bypassing gear 51 and the second bypassing gear 52 to realize the power bypass.

Specifically, the first bypassing gear 51 and the second bypassing gear 52 are both sleeved on the first output shaft 20 or the second output shaft 30 without engagement therewith, and the first synchronizer 53 is arranged therebetween, such that, after the first synchronizer 53 is engaged, power can be transmitted from the first bypassing gear 51 to the second bypassing gear 52, and then transmitted from the second bypassing gear 52 to the input shaft 10 that is in transmission connection thereto; alternatively, the power can be transmitted from the second bypassing gear 52 to the first bypassing gear 51, and then transmitted from the first bypassing gear 51 to the input shaft 10 that is in transmission connection thereto, so as to realize power bypass.

In some embodiments, the dual-clutch transmission 100 further includes: a second synchronizer 54 located outside the first bypassing gear 51 and a third synchronizer 55 located outside the second bypassing gear 52, and the second synchronizer 54 is adapted to control the transmission connection between the first bypassing gear 51 and the corresponding output shaft, and the third synchronizer 55 is adapted to control the transmission connection between the second bypassing gear 52 and the corresponding output shaft.

The driven gear 40 adjacent to the first bypassing gear 51 shares the second synchronizer 54 with the first bypassing gear 51; and the driven gear 40 adjacent to the second bypassing gear 52 shares the third synchronizer 55 with the second bypassing gear 52.

Specifically, by arranging the second synchronizer 54 and the third synchronizer 55, the first bypassing gear 51, the driven gear 40 adjacent to the first bypassing gear 51, the second bypassing gear 52, and the driven gear 40 adjacent to the second bypassing gear 52 can be directly connected with the corresponding output shafts to realize the power output of a corresponding gear position. In this way, the number of synchronizers in the dual-clutch transmission 100 can be reduced, thereby causing the dual-clutch transmission 100 to be more compact while reducing the cost.

As shown in Fig. 2, the dual-clutch transmission 100 further includes: a first thrust bearing 61, a second thrust bearing 62, and a third thrust bearing 63. The first thrust bearing 61 is arranged corresponding to the first synchronizer 53, the second thrust bearing 62 is arranged corresponding to the second synchronizer 54, and the third thrust bearing 63 is arranged corresponding to the third synchronizer 55.

Additionally, the dual-clutch transmission 100 further includes: a first needle bearing 64 positioned between the first thrust bearing 61 and the second thrust bearing 62, and a second needle bearing 65 positioned between the first thrust bearing 61 and the third thrust bearing 63.

Therefore, in the dual-clutch transmission 100 of the embodiment of the present application, the second thrust bearing 62 and the third thrust bearing 63 are subjected to axial forces away from each other when achieving the low gear through the power bypass, so that the rotational speed and load in the low gear are relatively low, which can ensure reasonable stress and relatively low wear of the second thrust bearing 62 and the third thrust bearing 63. Therefore, two ends of the first thrust bearing 61 are subjected to the axial forces of the first bypassing gear 51 and the second bypassing gear 52 that are directed toward each other when achieving the high gear through the power bypass, and the resulting axial force (i.e. the difference between the two axial forces) of the first bypassing gear 51 and the second bypassing gear 52 can effectively lower the load on the first thrust bearing 61 in the high gear, so as to improve the load environment of the dual-clutch transmission 100, and ensures a more reasonable force distribution amongst the plurality of the bearings and bypassing gears when the dual-clutch transmission 100 operates at the high-speed gear.

It should be noted that the power bypass process of the dual-clutch transmission 100 of the present application is as follows.

As shown in Fig. 1, the area indicated by the dotted line in Fig. 1 is the area where the bypassing gears are located.

The power transmission process of the high gear is: the hollow shaft 12 -> the second bypassing gear 52 -> the first synchronizer 53 -> the first bypassing gear 51 -> the solid shaft 11 -> the first output shaft 20.

Specifically, the power is transmitted from the first bypassing gear 51 to the solid shaft 11 through a gear on the solid shaft 11 that meshes with the first bypassing gear 51, and is output to the first output shaft 20 through its engagement with the solid shaft 11 via the respective driving and driven gears, so that a high-gear output higher than that of the first bypassing gear 51 is achieved through the driven gear located on the left side of the first bypassing gear 51 (for example, the ninth-gear output is achieved through the seventh-gear output).

The power transmission process of the low gear is: the solid shaft 11 → the first bypassing gear 51 → the first synchronizer 53 → the second bypassing gear 52 → the hollow shaft 12 → the second output shaft 30.

Specifically, the power is transmitted from the second bypassing gear 52 to the hollow shaft 12 through a gear on the hollow shaft 12 that meshes with the second bypassing gear 52, and is output to the second output shaft 30 through its engagement with the hollow shaft 12 via respective driving and driven gears, so as to realize a low-gear output lower than that of the second bypassing gear 52 through the driven gear positioned on the left side of the second bypassing gear 51 (the first-gear output is achieved through the second-gear output).

In some embodiments, an adjusting washer 66 is disposed on the second thrust bearing 62 and/or the third thrust bearing 63. Therefore, by arranging the adjusting washer 66, gaps between the plurality of bearings can be adjusted into a more reasonable range, and the force between the bearings can be further improved, so as to prolong the service life of the dual-clutch transmission 100.

In some embodiments, the driven gears 40 are configured as left-handed helical gears, and the bypassing gears are configured as right-handed helical gears. As a result, the axial forces on the driven gears 40 are opposite to the axial forces on the bypassing gears, so that the axial forces of the bypassing gears are as described above during the high-gear power bypass and the low-gear power bypass of the dual-clutch transmission 100, thereby prolonging the service life of the dual-clutch transmission 100. The vehicle according to the embodiment of the second aspect of the present application includes: the dual-clutch transmission 100 in the above-described embodiment.

The vehicle according to the embodiment of the present application adopts the above-mentioned dual-clutch transmission 100, and has the same technical effect as the above-mentioned dual-clutch transmission 100, which will not be repeated here.

In the description of the present application, it should be understood that orientation or positional relationship indicated by the terms "center", "longitudinal", "transverse", "length", "width", "thickness", "upper", "lower", "front", " rear", "left", "right", "vertical", "horizontal", "top", "bottom", "inner", "outer", "axial", "radial", "circumferential" etc. is based on the orientation or positional relationship shown in the drawings, and is merely for the convenience of describing the application and simplifying the description, rather than indicating or implying that the referred device or element must have a specific orientation, or be configured and operated with a specific orientation, and therefore should not be construed as limiting the application.

In the description of this application, it should be noted that unless otherwise specified and limited, the terms "installation", "connected", and "connection" should be understood in a broad sense, for example, it may be fixedly connected or detachably connected, or integrally connected; it may be directly connected, or indirectly connected through an intermediary, and it may be an internal communication of two elements. Those of ordinary skill in the art can understand the specific meanings of the above terms in this application in specific situations.

In the description of this specification, descriptions referring to the terms "an embodiment", "some embodiments", "exemplary embodiments", "examples", "specific examples", or "some examples" etc. mean that the specific features, structures, materials, or characteristics described in combination with the embodiments or examples are included in at least one embodiment or example of the present application. In this description, schematic representations of the above terms do not necessarily refer to the same embodiment or example.

Although the embodiments of the present application have been shown and described, those skilled in the art can understand that various changes, modifications, substitutions and variations can be made to these embodiments without departing from the principle and spirit of the present application. The scope of the application is defined by the claims and their equivalents.

## Claims

1. A dual-clutch transmission, comprising:
an input shaft;
a first output shaft, the first output shaft being optionally in a transmission connection with the input shaft;
a second output shaft, the second output shaft being optionally in a transmission connection with the input shaft; and
a plurality of driven gears, the plurality of driven gears being respectively arranged on the first output shaft and the second output shaft;
wherein at least two of the plurality of driven gears are configured as bypassing gears, and two adjacent bypassing gears being subjected to axial forces directed toward each other when the dual-clutch transmission operates in high gear through the bypassing gears.

2. The dual-clutch transmission according to claim 1, wherein the bypassing gears comprise: a first bypassing gear and a second bypassing gear, and
wherein the dual-clutch transmission further comprises: a first synchronizer located between the first bypassing gear and the second bypassing gear, the first synchronizer is adapted to control a transmission connection between the first bypassing gear and the second bypassing gear to realize power bypass.

3. The dual-clutch transmission according to claim 2, wherein the dual-clutch transmission further comprises: a second synchronizer located outside the first bypassing gear and a third synchronizer located outside the second bypassing gear, and the second synchronizer is adapted to control a transmission connection between the first bypassing gear and a corresponding output shaft, and the third synchronizer is adapted to control a transmission connection between the second bypassing gear and a corresponding output shaft.

4. The dual-clutch transmission according to claim 3, wherein the dual-clutch transmission further comprises: a first thrust bearing, a second thrust bearing, and a third thrust bearing,
wherein the first thrust bearing is arranged corresponding to the first synchronizer, the second thrust bearing is arranged corresponding to the second synchronizer, and the third thrust bearing is arranged corresponding to the third synchronizer.

5. The dual-clutch transmission according to claim 4, wherein the dual-clutch transmission further comprises: a first needle bearing positioned between the first thrust bearing and the second thrust bearing, and a second needle bearing positioned between the first thrust bearing and the third thrust bearing.

6. The dual-clutch transmission according to claim 4, wherein an adjusting washer is disposed on the second thrust bearing and/or the third thrust bearing.

7. The dual-clutch transmission according to claim 3, wherein the driven gear adjacent to the first bypassing gear shares the second synchronizer with the first bypassing gear.

8. The dual-clutch transmission according to claim 3, wherein the driven gear adjacent to the second bypassing gear shares the third synchronizer with the second bypassing gear.

9. The dual-clutch transmission according to any one of claims 1-8, wherein the driven gears are configured as left-handed helical gears, and the bypassing gears are configured as right-handed helical gears.

10. A vehicle comprising the dual-clutch transmission according to any one of claims 1-9.
